# EUROPEAN PATENT SPECIFICATION

(11) **EP 3 650 248 B1**
(45) Date of publication and mention of the grant of the patent: **09.02.2022**
(21) Application number: 19176850.6
(22) Date of filing: 28.05.2019
(51) Int. Cl.: B60C 23/04

(54) **TIRE PRESSURE SENSOR DEVICE**
REIFENDRUCKSENSORVORRICHTUNG
DISPOSITIF DE CAPTEUR DE PRESSION DE PNEUMATIQUE

(30) Priority: 09.11.2018 CN 201821850820 U
(43) Date of publication of application: 13.05.2020
(73) Proprietor: Nie, Yingwu, Shenzhen (CN)
(72) Inventor: Nie, Yingwu, Shenzhen (CN)
(74) Representative: Sun, Yiming

(56) References cited:
- EP-A1- 2 792 509
- CN-U- 202 062 964
- DE-A1- 10 131 168
- DE-A1-102012 105 249
- US-A1- 2009 206 294

## Description

### TECHNICAL FIELD

The present invention relates to an automobile accessory, and in particular to a universal tire pressure sensor device which can use a metal air valve and a rubber air valve and can adjust angles.

### BACKGROUND TECHNOLOGY

An automobile tire pressure sensor is an accessory that is often installed on automobiles. When an original part is damaged or out of power, it is necessary to replace with a replacement part. There are two types of tire pressure sensors available in the market. One is applied for angle adjustable metal air valve and the other is applied for rubber air valve. These two are not universal. The problem that arises is that the sensor can only be installed with a metal air valve, but cannot be replaced by a rubber air valve; or the sensor can only be installed with a rubber air valve, but cannot be replaced by a metal air valve. Hence, maintenance becomes difficult because corresponding matching components must be used. In order to maintain the consistency with the original air valve (metal or rubber), a maintenance personnel must prepare an inventory of both metal and rubber sensors. This increases pressure on inventory and capital cost for the agent.

US 2009/206294 A1 discloses a valve stem with a connecting cap for a tire pressure detector has a body, a connecting cap and a fastener. The body is tubular, is a valve stem applied for truck and has an outer section, an inner section and a fixing nut. The inner section is integrally formed coaxially on the outer section and has an outlet hole being formed thereon. The fixing nut is movably mounted on the outer section. The connecting cap is cylinder, has an outer end and a hole and is detachably mounted on the inner section. The hole is coaxially and longitudinally formed on the connecting cap. The fastener corresponds to the hole and the outlet hole and holds a wireless pressure detector on the outer end of the connecting cap.

DE 101 31 168 A1 discloses a device for attachment of a sensor on the inner side of a tire valve with respect to the wheel. Attached to the valve directly is an adapter that allows the sensor to be freely positioned with respect to the valve.

CN 202 062 964 U discloses a fixing and adjusting device of a module in a tire pressure monitoring system, which comprises a module casing, an air tap guide pipe and a valve bolt. A base is arranged on the module casing and provided with a through hole. The valve bolt penetrates through the through hole to be connected with the air tap guide pipe, a gasket is arranged between the valve bolt and the base, and teeth which are meshed with each other are respectively arranged on corresponding surfaces of the gasket and the base.

DE 10 2012 105249 A1 discloses a valve stem for wireless tire pressure detector wherein the stem has a mounting portion formed at an upper end of a mounting housing and extended at an innermost surface of the mounting housing in a mounting hole between an engagement portion and a mounting portion. A circular projection is circular at the inner surface of the mounting housing formed in the mounting hole between the engaging portion and the mounting portion. The circular projection of the mounting housing is in connection with a circular groove, so that a pipe is firmly mounted to the assembly housing.

EP 2 792 509 A1 discloses a tire pressure sensor device includes a tire pressure sensor including a housing and a mounting block defining a through portion in a coupling means thereof, and an air valve including an extension rod having a rod body rotatably inserted through the through portion and a stop block located at one end of the rod body and rotatable with the rod body between a first angular position where the stop block is kept in accurate alignment with the through portion and axially movable with the rod body through the through portion for allowing separation between the tire pressure sensor and the air valve and a second angular position where the stop block is stopped at the coupling means of the mounting block in a staggered manner relative to the through portion to prohibit separation between the tire pressure sensor and the air valve.

### SUMMARY

In view of the existing deficiencies, the present invention provides a universal tire
pressure sensor device which can use both a metal valve and a rubber valve and can adjust angles.

The technical solution adopted by the present invention to solve the technical
problem is provided with the features of claim 1.

Preferably, a bottom portion of the plastic plug extends around the circular through-hole to form an extending portion that is fittingly embedded into the strip-shaped through-hole, and the circular through-hole extends through the extending portion.

Preferably, the second groove is an oval-shaped groove.

Preferably, the first groove is provided with a flat surface on an inner wall corresponding to a long side direction of the strip-shaped through-hole, and a surface of the plastic plug that corresponds to the flat surface may also be planar in shape.

Preferably, the connecting portion is a column body having a semi-circular ring-shaped cross section.

Preferably, the plastic plug is in the shape of a spherical cap, and a height of the spherical cap is greater than a radius of the spherical cap.

Preferably, the plastic plug is an elastic deformable plastic plug, or the plastic plug is made of hard plastic.

The beneficial effects of the present invention are as follows: In the present invention the first groove has the shape of a spherical cap and can facilitate angle adjustment and installation of a metal air valve, and the strip-shaped through-hole can facilitate fixing of a screw. The plastic plug is configured to allow a rubber air valve to be mounted on the housing, which can be fitted with either a metal air valve or a rubber air valve. The angle of installation can also be adjusted. This can solve the problem that the conventional tire pressure sensor is not universal for angle adjustable metal and rubber air valves.

### BRIEF DESCRIPTION OF THE DRAWINGS

FIG. 1 is a schematic view showing the structure of a plastic plug of spherical cap shape being separated from a housing according to a first embodiment of the present invention;
FIG. 2 is a bottom view of the structure of a plastic plug with an extending portion according to a second embodiment of the present invention; and
FIG. 3 is a schematic view of the structure of the housing combined with an air valve according to an embodiment of the present invention. Names and reference numerals of the components shown in the figures: 1 - housing, 2 - air valve, 3 - connecting portion, 30 - first groove, 31 - strip-shaped through-hole, 300 - flat surface, 4 - plastic plug, 40 - second groove, 41 - extending portion, 42 - circular through-hole, 5 - screw.

### DETAILED DESCRIPTION OF THE EMBODIMENTS

The present invention will be further described with reference to the accompanying drawings and embodiments. In addition, the directional terms mentioned in the present disclosure, for example, "upper", "lower", "front", "back", "left", "right", "inside", "outside", etc. are only directional terms used in the drawings, are intended to provide a better and clearer description of the present disclosure.

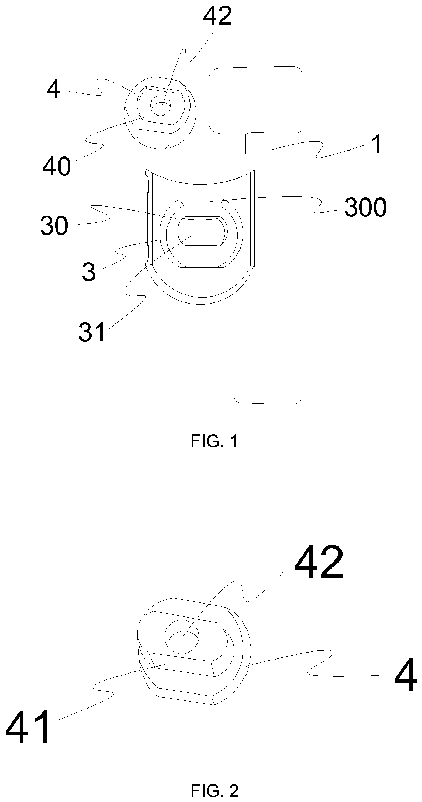

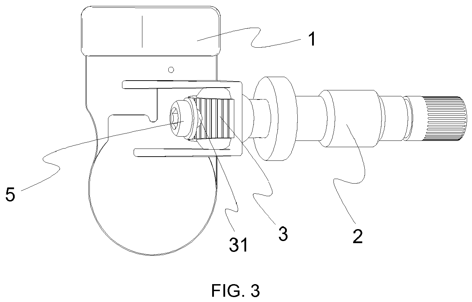

As shown in the embodiments of the present invention in FIG. 1 to FIG. 3, for example, a tire pressure sensor device may include a housing 1 mounted with a sensor body, an air valve 2, and a connecting portion 3 extending from the housing 1 for mounting the air valve 2. The connecting portion 3 may be provided with a first groove 30 in the shape of a spherical cap. A bottom surface of the first groove 30 may be provided with a strip-shaped through-hole 31 penetrating through a bottom portion of the first groove 30. A plastic plug 4 may be detachably mounted on and mating with the first groove 30. A top portion of the plastic plug 4 may be provided with a second groove 40. The plastic plug 4 may be further provided with a circular through-hole 42 penetrating through a bottom surface of the second groove 40. The air valve 2 can be fixedly connected to the housing 1 by screws passing through the strip-shaped through-hole 31, or the strip-shaped through-hole 31 and the circular through-hole 42. To use a metal air valve, the plastic plug 4 is removed, and the ball head of the metal air valve is inserted in the first groove 3. The screw 5 is passed through the strip-shaped through-hole 30 from the bottom portion of the connecting portion 3 and connected with the air valve 2. After adjusting the angle, the screw 5 is tightened so that the air valve 2 can be fixed in the first groove 30. When a rubber air valve 2 is required to be used, the metal air valve is unscrewed. The plastic plug 4 can be first installed in the first groove 30, and then the rubber air valve is inserted into the second groove 40. The screw 5 is passed through the strip-shaped through-hole 31 and the circular through-hole 42 from the bottom portion of the connecting portion 3, and connected to the air valve 2. Such a structure can be used to install either a metal air valve or a rubber air valve. This can solve the problem that the conventional tire pressure sensor is not universal for angle adjustable metal and rubber air valves. This can also expand the range of usage of the sensor. At the same time of installing air valves of different materials, the angle can also be adjusted. Therefore, it is very convenient to use. In order to better fit the rubber air valve to the second groove 40, the second groove 40 may be in the form of an oval-shaped groove. In order to fix the position of the air valve 2 after installation, a bottom portion of the plastic plug 4 around the circular through-hole 42 may be extended to form an extending portion 41. The extending portion 41 can be fittingly embedded into the strip-shaped through-hole 31, and the circular through-hole 42 may extend through the extending portion 41. The air valve 2 can be fixedly coupled to the housing 1 by the screw 5 passing through the strip-shaped through-hole 31 and the circular through-hole 42.

In a further improvement, as shown in FIG. 1, since the ball head of the metal air valve is usually flattened to form a flat surface, the first groove 30 may be provided with a flat surface 300 on an inner wall that corresponds to a long side direction of the strip-shaped through-hole 31. Thus, when the metal air valve is installed, the flat surface 300 on the inner wall of the first groove 30 can be abutted against the flat surface of the ball head of the metal air valve, so that the metal air valve can be more firmly installed and cannot be easily loosened. In order to fit the plastic plug 4 in the first groove 30, a surface of the plastic plug 4 that corresponds to the flat surface 300 may also be planar in shape. The mounting through the matching of two flat surfaces can be more secure.

In a further improvement, as shown in FIG. 1, the connecting portion 3 may be a column body having a semi-circular ring-shaped cross section. This can facilitate the setting of the first groove 30. The semi-circular ring-shaped connecting portion can well surround the air valve 2. This can avoid the problem that, in caser it is smaller than a semi-circle, the air valve may slide out from the column body 3 during angle adjustment or in use. This can also avoid the problem that, in case it is larger than a semi-circle, it is not easy to assemble. The diameter of the connecting portion 3 may be preferably adapted to the diameter of the ball head of the air valve.

In a further improvement, as shown in FIG. 1, the plastic plug 4 may be in the shape of a spherical cap, and the height of the spherical cap may be greater than the radius of the spherical cap. In this way, there will not be a problem that the plastic plug 4 can fall out from the first groove 30 during angle adjustment of the rubber air valve. At the same time, the plastic plug 4 can be an elastic deformable plastic plug, or it can be made of hard plastic. When subjected to an external force, the plastic plug can elastically deform and dampen the impact of the external force. Hence, this can increase its service life. The hard plastic can better mate with the first groove 30. The plastic plug can be a common rubber plug. Rubber plugs are easy to manufacture and low in price. Hence, it can increase production efficiency and reduce production cost.

## Claims

1. A tire pressure sensor device, comprising a housing (1) mounted with a sensor body, an air valve (2), a connecting portion (3) extending from the housing for mounting the air valve, the connecting portion being provided with a first groove (30) in a shape of a spherical cap, a bottom surface of the first groove being provided with a strip-shaped through-hole (31) penetrating through a bottom portion of the first groove, and a plastic plug (4) being detachably mounted on and mating with the first groove, the plastic plug further provided with a circular through-hole (42) and the air valve being fixedly connected to the housing by screws (5) passing through the strip-shaped through-hole, or the strip-shaped through-hole and the circular through-hole, **characterized in that** a top portion of the plastic plug is provided with a second groove (40) and the circular through-hole (42) penetrates through a bottom surface of said second groove (40).

2. The tire pressure sensor device according to claim 1, wherein a bottom portion of the plastic plug around the circular through-hole is extended to form an extending portion (41) that fittingly embedded into the strip-shaped through-hole, and the circular through-hole extends through the extending portion.

3. The tire pressure sensor device according to claim 1, wherein the second groove is an oval-shaped groove.

4. A tire pressure sensor device according to claim 1, wherein the first groove is provided with a flat surface (300) on an inner wall that corresponds to a long side direction of the strip-shaped through-hole, and a surface of the plastic plug that corresponds to the flat surface is also planar in shape.

5. The tire pressure sensor device according to claim 1, wherein the connecting portion is a column body having a semi-circular ring-shaped cross section.

6. The tire pressure sensor device according to claim 1, wherein the plastic plug is in the shape of a spherical cap, and a height of the spherical cap is greater than a radius of the spherical cap.

7. The tire pressure sensor device according to any one of claims 1-6, wherein the plastic plug is an elastic deformable plastic plug, or the plastic plug is made of hard plastic.

## Patentansprüche

1. Reifendrucksensorvorrichtung, aufweisend ein Gehäuse (1), woran ein Sensorkörper angebracht ist, ein Luftventil (2), einen Verbindungsabschnitt (3), der sich von dem Gehäuse erstreckt, um das Luftventil anzubringen, wobei der Verbindungsabschnitt mit einer ersten Vertiefung (30) in der Form einer kugelförmigen Kappe versehen ist, wobei eine untere Fläche der ersten Vertiefung mit einer streifenförmigen Durchgangsöffnung (31) versehen ist, die durch einen unteren Abschnitt der ersten Vertiefung hindurch verläuft, und einen Kunststoffstöpsel (4), der abnehmbar an der ersten Vertiefung angebracht ist und mit dieser eingreift, wobei der Kunststoffstöpsel ferner mit einer runden Durchgangsöffnung (42) versehen ist, und das Luftventil durch Schrauben (5), die durch die streifenförmige Durchgangsöffnung oder die streifenförmige Durchgangsöffnung und die runde Durchgangsöffnung verlaufen, fest mit dem Gehäuse verbunden ist, **dadurch gekennzeichnet, dass**
ein oberer Abschnitt des Kunststoffstöpsels mit einer zweiten Vertiefung (40) versehen ist und die runde Durchgangsöffnung (42) durch eine untere Fläche der zweiten Vertiefung (40) hindurch verläuft.

2. Reifendrucksensorvorrichtung nach Anspruch 1, wobei ein unterer Abschnitt des Kunststoffstöpsels um die runde Durchgangsöffnung so verlängert ist, dass er einen Verlängerungsabschnitt (41) bildet, der schlüssig in die streifenförmige Durchgangsöffnung eingebettet wird, und die runde Durchgangsöffnung durch den Verlängerungsabschnitt verläuft.

3. Reifendrucksensorvorrichtung nach Anspruch 1, wobei die zweite Vertiefung eine oval geformte Vertiefung ist.

4. Reifendrucksensorvorrichtung nach Anspruch 1, wobei die erste Vertiefung an einer Innenwand, die der Richtung einer langen Seite der streifenförmigen Durchgangsöffnung entspricht, mit einer ebenen Fläche (300) versehen ist und eine Fläche des Kunststoffstöpsels, die der ebenen Fläche entspricht, ebenfalls eine planare Form aufweist.

5. Reifendrucksensorvorrichtung nach Anspruch 1, wobei der Verbindungsabschnitt ein säulenförmiger Körper mit einem halbrunden ringförmigen Querschnitt ist.

6. Reifendrucksensorvorrichtung nach Anspruch 1, wobei der Kunststoffstöpsel die Form einer kugelförmigen Kappe aufweist und eine Höhe der kugelförmigen Kappe größer als ein Radius der kugelförmigen Kappe ist.

7. Reifendrucksensor nach einem der Ansprüche 1 bis 6, wobei der Kunststoffstöpsel ein elastisch verformbarer Kunststoffstöpsel ist oder der Kunststoffstöpsel aus einem harten Kunststoff besteht.

## Revendications

1. Dispositif capteur de pression pneumatique, comprenant un boîtier (1) monté avec un corps de capteur, une soupape à air (2), une partie de raccordement (3) s'étendant à partir du boîtier pour le montage de la soupape à air, la partie de raccordement étant pourvue d'une première rainure (30) sous le forme d'une calotte sphérique, une surface inférieure de la première rainure étant pourvue d'un trou traversant en forme de bande (31), lequel pénètre dans une partie inférieure de la première rainure, et bouchon en plastique (4) étant monté de façon détachable sur la première rainure tout en s'accouplant à celle-ci, le bouchon en plastique étant en outre pourvu d'un trou traversant circulaire (42) et la soupape à air étant raccordée au boîtier à l'aide de vis (5) traversant le trou traversant en forme de bande, ou le trou traversant en forme de bande et le trou traversant circulaire,
**caractérisé en ce que**
une partie supérieure du bouchon en plastique est pourvue d'une deuxième rainure (40) et le trou traversant circulaire (42) pénètre à travers une surface inférieure de ladite deuxième rainure (40).

2. Dispositif capteur de pression pneumatique selon la revendication 1, dans lequel une partie inférieure du bouchon en plastique autour du trou traversant circulaire s'étend de manière à former une partie d'extension (41) incorporée de façon ajustée dans le trou traversant en forme de bande, et le trou traversant circulaire s'étend à travers la partie d'extension.

3. Dispositif capteur de pression pneumatique selon la revendication 1, dans lequel la deuxième rainure est une rainure de forme ovale.

4. Dispositif capteur de pression pneumatique selon la revendication 1, dans lequel la première rainure est pourvue d'une surface plane (300) sur une paroi intérieure correspondant à une direction de côté longitudinal du trou traversant en forme de bande, et une surface du bouchon en plastique correspondant à la surface plane est également de forme planaire.

5. Dispositif capteur de pression pneumatique selon la revendication 1, dans lequel la partie de raccordement est un corps de colonne présentant une section transversale annulaire semi-circulaire.

6. Dispositif capteur de pression pneumatique selon la revendication 1, dans lequel le bouchon en plastique présente une forme de calotte sphérique, et une hauteur de la calotte sphérique est supérieure à un rayon de la calotte sphérique.

7. Dispositif capteur de pression pneumatique selon l'une quelconque des revendications 1 à 6, dans lequel le bouchon en plastique est un bouchon en plastique élastiquement déformable, ou le bouchon en plastique est constitué de plastique dur.
